# EUROPÄISCHE PATENTANMELDUNG

(11) **EP 3 053 942 A1**
(43) Veröffentlichungstag der Anmeldung: **10.08.2016**
(21) Anmeldenummer: 15154022.6
(22) Anmeldetag: 05.02.2015
(51) Int. Cl.: C08G 59/40, C09D 163/00

(54) **Wasserbasierende Primerzusammensetzung für Polycarbonat und Polycarbonat-Blends**

(71) Anmelder: Sika Technology AG, 6340 Baar (CH)
(72) Erfinder: Oeser, Michael, 22880 Wedel (DE); Buchholz, André, 27721 Ritterhude (DE); Urbach, Dirk, 22926 Ahrensburg (DE); Hanhörster, Thomas, 25421 Pinneberg (DE)
(74) Vertreter: Sika Patent Attorneys

(57) **Zusammenfassung**

Die vorliegende Erfindung betrifft eine wasserbasierte Primerzusammensetzung mit besonderer Eignung für die Vorbehandlung von Polycarbonatsubstraten, die eine Komponente K1 umfassend eine wässrige Epoxidharzdispersion, eine wässrige Polyester-Polyurethandispersion und eine wässrige Polyacrylatdispersion, sowie gegebenenfalls ein wassermischbares organisches Lösungsmittel, und eine zweite Komponente K2, die einen wasserdispergierbaren Vernetzer auf Isocyanatbasis enthält, aufweist. Die beschriebenen Primer vermitteln eine starke Haftung von nachträglich aufgebrachten Klebstoffen zu Polycarbonatsubstraten und ermöglichen eine Verarbeitung unter signifikanter Reduktion von VOC-Emissionen und Vermeidung der Entstehung von Spannungsrissen.

## Beschreibung

### Technisches Gebiet

Die Erfindung betrifft das Gebiet der Primerzusammensetzungen sowie die Verwendung von Primerzusammensetzungen zur Beschichtung und Vorbehandlung von Polycarbonatsubstraten oder Substraten aus Polycarbonat-Blends. Ferner betrifft die vorliegende Erfindung ein Verfahren zum Behandeln von PolycarbonatSubstraten sowie zum Verkleben solcher Substrate. Dabei wird das Substrat zunächst mit einer wasserbasierten Primerzusammensetzung beschichtet, auf die anschließend ein Klebstoff aufgetragen wird. Danach wird das mit Klebstoff beschichtete Substrat mit einem zweiten Substrat in Kontakt gebracht und verklebt.

### Stand der Technik

Die sichere, dauerhafte Verklebung von Bauteilen aus Polycarbonat oder Polycarbonat-Blends, beispielsweise in Form von Polycarbonat/ABS-Blends, mit anderen Substraten erfordert in der Regel eine Vorbehandlung des Substrats mit geeigneten Primern. Nur über eine Beschichtung mit solchen Primern kann eine ausreichende Festigkeit eines aufgebrachten Klebstoffs gewährleistet werden, um eine Verklebung von Bauteilen z.B. in der Automobilindustrie zu ermöglichen. Solche Verklebungen müssen besonderen Anforderungen genügen, damit sie den technischen Alterungsprüfungen genügen. Beispielsweise müssen die Verklebungen gegenüber Wärme- und Kältelagerungen, Lagerungen in warmen und feuchten Umgebungen, Lagerungen unter Wasser sowie gegenüber Klimawechseln stabil sein.

Derzeit werden als Primer für Polycarbonat und Polycarbonat-Blends vor allem lösungsmittelhaltige Formulierungen eingesetzt. Solche Primer basieren z.B. auf Isocyanaten als Wirkstoffkomponente, und sind unter den Handelsbezeichnungen Sika Primer 207LUM oder Sika Primer 206G+P von Sika erhältlich. In der JP 2013-010854 A wird zudem ein Primer für Polycarbonate vorgeschlagen, der auf chloriertem Gummi, einem Ethylenvinylacetatcopolymer und Lösungsmitteln, insbesondere auf Basis eines Gemisches von alkoholischen Lösungsmitteln und aromatischen Kohlenwasserstofflösungsmitteln, beruht.

Viele dieser lösungsmittelbasierenden Primer führen auf Polycarbonat und Polycarbonat-Blends jedoch zu Problemen mit Spannungsrissen, die auf die in den Primern enthaltenen Lösungsmittel, wie beispielsweise Aceton oder Ethylacetat, zurückzuführen sind. Das Problem der Spannungsrisse wird in U. Berges, Adhäsion, 9/2014, S. 38 bis 42, ausführlich erläutert. Spannungsrisse werden in der Regel nach Bauteilprüfungen beobachtet und führen zum vorzeitigen Versagen der Verklebung bzw. zum Nichterreichen von gewünschten Festigkeiten.

Es wurde festgestellt, dass Spannungsrisse vor allem dann auftreten, wenn auf eine Beschichtung aus einem lösungsmittelbasierten Primer ein weichmacherhaltiger Klebstoff aufgebracht wird. Da viele feuchtigkeitsvernetzende ein- und zweikomponentige Polyurethanklebstoffe einen gewissen Gehalt an Weichmachern aufweisen, können solche Klebstoffe nur mit zusätzlichen Maßnahmen für die Verklebung von Polycarbonatsubstraten eingesetzt werden. So schlägt z.B. die DE 10 2014 003 777 A1 vor, das Problem der Entstehung von Spannungsrissen dadurch zu beheben, dass zwei verschiedene Primer übereinander aufgetragen werden. Auf diese Primerdoppelschicht soll dann eine Klebstoffschicht aufgebracht werden. Die doppelte Primerbeschichtung soll gewährleisten, dass eine Wechselwirkung zwischen einem auf die Primer aufgebrachten Klebstoff und dem Substrat, die zur Ausbildung von Spannungsrissen führt, vermindert wird.

Auch in den in der DE 10 2014 003 777 A1 beschriebenen Primerzusammensetzungen kommen jedoch substantielle Anteile an organischen Lösungsmitteln, insbesondere in Form von Ethylacetat und Methylethylketon, zum Einsatz. Das hat zur Folge, dass es während der Verarbeitung der Primerzusammensetzungen zu Emissionen von organischen Verbindungen (VOC) kommt, die durch technische Maßnahmen aufgefangen werden müssen. Darüber hinaus führt die Notwendigkeit einer Beschichtung mit zwei Primern zu einem höheren Herstellungsaufwand und Kostennachteilen.

Es besteht daher ein Bedarf einerseits nach einem Primersystem, das möglichst nur geringe Mengen an organischen Lösungsmitteln enthält und weitgehend auf Wasser basiert. Andererseits besteht ein Bedarf nach einem Primersystem, das auch nach Auftrag von nur einer Schicht geeignet ist, um Wechselwirkungen zwischen einem weichmacherhaltigen Polyurethanklebstoff und Lösungsmitteln aus der Primerbeschichtung zu minimieren und so die Entstehung von Spannungsrissen effektiv zu unterdrücken.

Die vorliegende Erfindung befasst sich mit diesen Aufgaben.

### Darstellung der Erfindung

Die Aufgabe der vorliegenden Erfindung besteht nach dem vorstehenden Ausgeführten darin, eine wasserbasierte Primerzusammensetzung zur Beschichtung von Substraten aus Kunststoffen, insbesondere in Form von Polycarbonaten oder Polycarbonatblends, zur Verfügung zu stellen, durch die eine nachteilige Wechselwirkung von Weichmachern aus einem nachträglich aufgebrachten Klebstoffsystem und dem in konventionellen Primerzusammensetzungen eingesetzten organischen Lösungsmitteln unterbunden wird, um so eine nachteilige Spannungsrissbildung möglichst vollständig zu unterdrücken. Durch derartige Primer wird sichergestellt, dass eine dauerhafte und alterungsbeständige Verklebung von Bauteilen aus Polycarbonat oder Polycarbonatblends mit verschiedenen anderen Substraten gewährleistet werden kann. Die Verklebungen sollen vorzugsweise unter Lagerungsbedingungen hoher Luftfeuchtigkeit, Unterwasserlagerung, Lagerung bei erhöhter Temperatur sowie bei Lagerung unter hoher Luftfeuchtigkeit und hoher Temperatur stabil sein. Überraschend hat sich gezeigt, dass eine wasserbasierte Primerzusammensetzung gemäß Anspruch 1 in der Lage ist, diese Anforderungen zu erfüllen.

Ein weiterer Aspekt der vorliegenden Erfindung befasst sich mit einem Verfahren zur Behandlung von Substraten, bei denen eine wasserbasierte Primerzusammensetzung gemäß Anspruch 1 zunächst vermischt, und anschließend auf das Substrat aufgebracht und dort getrocknet wird. Darüber hinaus betrifft die vorliegende Erfindung ein Verfahren zum Verkleben von zwei Substraten, bei dem eine wasserbasierte Primerzusammensetzung gemäß Anspruch 1 zunächst vermischt und dann auf ein erstes Substrat aufgetragen und dort getrocknet wird. Anschließend wird auf die getrocknete Primerzusammensetzung ein Klebstoff aufgetragen und das mit Klebstoff beschichtete Substrat mit einem zweiten Substrat in Kontakt gebracht. Ein weiterer Aspekt der vorliegenden Erfindung befasst sich schließlich mit der Verwendung von wasserbasierten Primerzusammensetzungen zur Verklebung von Kunststoffsubstraten mit weichmacherhaltigen Polyurethanklebstoffen, wobei die gemischte Primerzusammensetzung auf ein Kunststoffsubstrat aufgetragen wird.

### Wege zur Ausführung der Erfindung

In einem ersten Aspekt betrifft die vorliegende Erfindung eine wasserbasierte Primerzusammensetzung mit einer ersten Komponente **K1**, umfassend
- eine wässrige Epoxidharzdispersion in einer Menge, dass der Gehalt des Epoxidharzes in der ersten Komponente 15 bis 45 Gew.-% beträgt,
- eine wässrige Polyester-Polyurethandispersion in einer Menge, dass der Gehalt des Polyester-Polyurethans in der ersten Komponente 2 bis 12 Gew.-% beträgt,
- eine wässrige Polyacrylatdispersion in einer Menge, dass der Gehalt des Polyacrylats in der ersten Komponente 1,5 bis 9 Gew.-% beträgt, sowie
- gegebenenfalls ein wassermischbares organisches Lösungsmittel in einer Menge von bis zu 40 Gew.-%, bezogen auf die erste Komponente
und einer zweiten Komponente **K2**, umfassend einen wasserdispergierbaren Vernetzer auf Isocyanatbasis.

In Bezug auf den Feststoffgehalt der verschiedenen Dispersionen unterliegt die vorliegende Erfindung keinen wesentlichen Beschränkungen; der Feststoffgehalt ist jedoch so zu wählen, dass die Mengen der relevanten Bestandteile in den vorgegebenen Bereichen liegen. Bevorzugte Feststoffanteile in den jeweiligen Dispersionen liegen bei 30 bis 70 Gew.-% und insbesondere 35 bis 60 Gew.-%.

Unter einem "Primer" wird im vorliegenden Dokument eine als Voranstrich geeignete Zusammensetzung verstanden, die neben nichtreagierenden flüchtigen Stoffen und optionalen festen Zuschlägen mindestens eine Substanz mit Isocyanatgruppen enthält und die befähigt ist, bei der Applikation auf einem Substrat zu einem festen, haftenden Film in einer Schichtdicke von typischerweise mindestens 5 µm auszuhärten. Die Aushärtung erfolgt einerseits durch das Verdampfen der nichtreaktiven flüchtigen Stoffe, wie insbesondere Lösungsmitteln, sowie andererseits durch die zur Vernetzung führende chemische Reaktion der Isocyanatgruppen mit funktionellen Gruppen der in der ersten Komponente **K1** enthaltenen Polymere, insbesondere dem Polyester-Polyurethan, so dass eine nachfolgend aufgebrachte Schicht, insbesondere aus einem Kleb- oder Dichtstoff, eine gute Haftung zu dem Substrat aufbauen kann.

Unter "Ablüften" wird im gesamten Dokument ein Abtrocknen einer wässrigen Zusammensetzung nach dem Auftragen derselben verstanden, wobei das Wasser und gegebenenfalls enthaltene Lösungsmittel ganz oder zumindest hauptsächlich verdunsten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidende Makromoleküle, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verwendungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, d.h., reaktive oligomere Voraddukte, deren funktionelle Gruppen am Aufbau von Makromolekülen beteiligt sind.

Der Begriff "Polyurethanpolymer" umfasst die Polymere, welche nach dem sogenannten Isocyanatpolyadditionsverfahren hergestellt wurden. Dies schließt auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanate und Polycarbodiimide.

Die wässrige Epoxidharzdispersion beruht insbesondere auf einem Epoxidharz, das mehr als eine Epoxidgruppe pro Molekül aufweist und ein Epoxidflüssigharz oder ein Epoxidfestharz ist. Der Begriff "Epoxidfestharz" ist dem Epoxidfachmann bestens bekannt und wird im Gegensatz zu "Epoxidflüssigharzen" verwendet. Die Glastemperatur von Festharzen liegt über Raumtemperatur, d.h., sie lassen sich bei Raumtemperatur zu schüttfähigen Pulvern zerkleinern.

Bevorzugte Epoxidflüssigharze weisen die Formel (I) auf

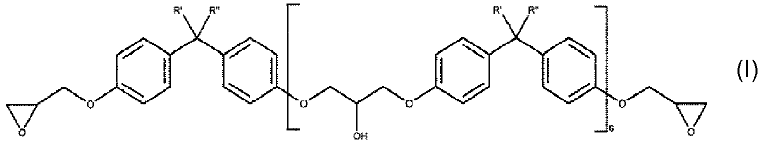

Hierbei stehen die Substituenten R' und R" unabhängig von einander entweder für H oder CH₃. Weiterhin steht der Index s für einen Wert von 0 bis 1. Bevorzugt steht s für einen Wert von kleiner als 0.2.

Bevorzugte Epoxidflüssigharze sind Diglycidylether von Bisphenol-A (DGEBA), von Bisphenol-F sowie von Bisphenol-A/F (Die Bezeichnung 'A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Resolution) erhältlich.

Bevorzugte Epoxidfestharze weisen die Formel (II) auf

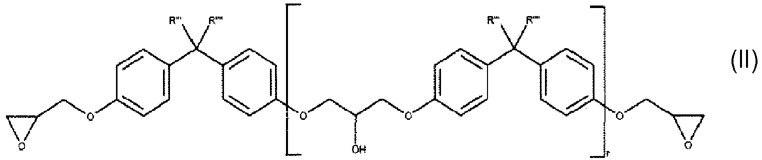

Hierbei stehen die Substituenten R'" und R"" unabhängig von einander entweder für H oder CH₃. Weiterhin steht der Index r für einen Wert von > 1.5, insbesondere von 2 bis 12.

Derartige Epoxidfestharze sind kommerziell als reine Feststoffe oder als wässrige Dispersionen erhältlich, beispielsweise von Dow, Huntsman oder Resolution.

Besonders bevorzugt ist als Epoxidharz ein Epoxidfestharz. Epoxidfestharze zeigen gegenüber Epoxidflüssigharzen den großen Vorteil, dass eine damit formulierte zwei- oder mehrkomponentige wässrige Primerzusammensetzung bedeutend schneller klebefrei ist, was für den Einsatz als Primer einen wesentlichen Vorteil darstellt, da die Wartezeit zwischen dem Auftrag des Primers und eines Kleb- oder Dichtstoffes auf dem Primer stark verkürzt werden kann.

Weitere geeignete Epoxidharze sind einerseits Epoxidharze mit N-Glycidyl-Gruppen, wie beispielsweise der folgenden drei Formeln, 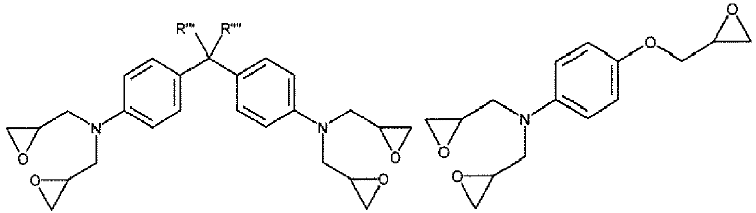 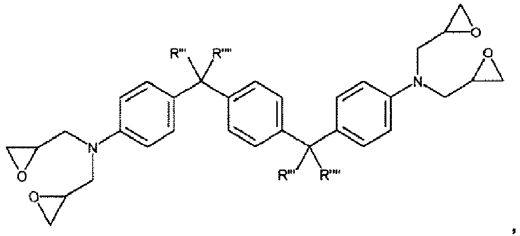 insbesondere, wie sie als Araldite® MY 721, MY 722, MY 720, MY 9512 oder MY 510 wie sie von Huntsman oder Epon HPT 1072 von Shell kommerziell erhältlich sind.

Andererseits sind weitere geeignete Epoxidharze solche, welche auf aliphatischen Glycidylethern basieren, wie beispielsweise die Epoxidharze der folgenden zwei Formeln 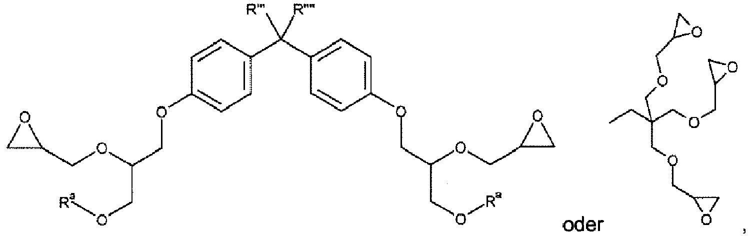 wobei R^{a} für einen linearen oder verzweigten Alkylrest, insbesondere mit 4 bis 8-C-Atomen, steht.

Andererseits sind weitere geeignete Epoxidharze solche, welche die folgende Formel aufweisen 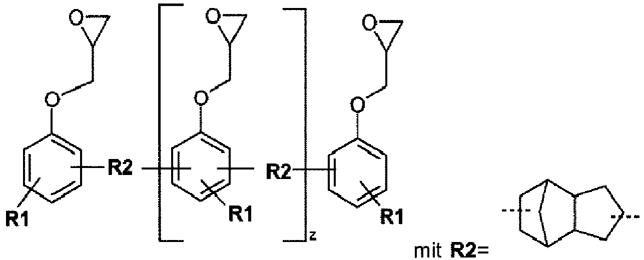 oder CH₂,
R1 = H oder Methyl und z = 0 bis 7.

Insbesondere handelt es sich hierbei um Phenol- oder Kresol-Novolake (R2 = CH₂).

Solche Epoxidharze sind unter dem Handelsnamen EPN oder ECN sowie Tactix®556 von Huntsman kommerziell erhältlich, verschiedene EPN und ECN-Typen werden auch beispielsweise von Huntsman als Dispersion in Wasser angeboten.

Andererseits sind weitere geeignete Epoxidharze Glycidylester, wie sie beispielsweise als Araldite ® PT 910 oder PY 184 von Huntsman vertrieben werden.

Als am meisten geeignete Epoxidharze haben sich solche mit einem Epoxidequivalentgewicht (EEW) von mindestens 1400 g/eq, bevorzugt im Bereich von 1500 bis 3000 g/eq und besonders bevorzugt etwa 1600 bis 2500 g/eq, erwiesen. Bei diesen Epoxidharzen handelt es sich bevorzugt um Bisphenol-A/Epichlorhydrin basierte Epoxidfestharze, wie sie beispielsweise unter dem Handelsnamen Epirez® 3540 von Momentive Specialty Chemicals Inc. vertrieben werden.

Der Anteil von Epoxidharz am Gewicht der ersten Komponente **K1** beträgt vorzugsweise 17 bis 35 Gew.-%.

Die wässrige Epoxidharzdispersion kann neben Wasser auch noch einen Anteil an einem organischen Lösungsmittel, beispielsweise in Form von 2-Propoxyethanol, enthalten, wobei jedoch der Gehalt solcher Lösungsmittel den Gehalt von Wasser in der Epoxidharzdispersion möglichst nicht übersteigen sollte.

Die erste Komponente enthält, wie vorstehend beschrieben, weiterhin eine wässrige Polyester-Polyurethandispersion, wobei es sich vorzugsweise bei dem Polyester-Polyurethan um ein elastomeres Polyester-Polyurethan handelt. Ein geeignetes Polyester-Polyurethan ist beispielsweise unter dem Handelsnamen Emuldur 381A von der BASF SE erhältlich. Als besonders günstiger Gehalt an Polyester-Polyurethan in der ersten Komponente können etwa 3 bis 10 Gew.-%, und insbesondere etwa 3,5 bis 9,5 Gew.-%, angegeben werden.

Als dritten wesentlichen Bestandteil enthält die erste Komponente eine wässrige Polyacrylatdispersion in einer Menge, dass der Gehalt des Polyacrylats in der ersten Komponente etwa 1,5 bis 9 Gew.-% beträgt.

Bei dem Polyacrylat handelt es sich vorzugsweise um ein hydroxyfunktionelles Polyacrylat. Besonders bevorzugte hydroxyfunktionelle Polyacrylate weisen eine Hydroxylzahl von 125 oder mehr, und insbesondere 130 oder mehr, auf. Darüber hinaus ist es bevorzugt, wenn die Hydroxylzahl des Polyacrylats nicht mehr als 500, und bevorzugt nicht mehr als 250, beträgt.

Als Polyacrylatdispersionen sind im Zusammenhang der vorliegenden Erfindung beispielsweise Macrynal VSM 6299w/42WA von Allnex Belgium SA, Joncryl OH8311 und Luhydran S945T (jeweils von BASF) geeignet, wobei Macrynal VSM 6299w/42WA die besten Gesamteigenschaften liefert und damit besonders bevorzugt ist.

Mit Blick auf die zu erzielende Lagerstabilität und die Anwendungseigenschaften ist es mit Vorteilen verbunden, wenn der Gehalt des Polyacrylats in der ersten Komponente etwa 1,75 bis 8 Gew.-%, und insbesondere etwa 1,85 bis 7,5 Gew.-%, beträgt.

Hinsichtlich des Gewichtsverhältnisses von Epoxyharz zur Summe der Gewichtsanteile von Polyester-Polyurethan und Polyacrylat in der wasserbasierten Primerzusammensetzung bestehen keine wesentlichen Einschränkungen. Es hat sich jedoch als zweckmäßig herausgestellt, wenn dieses Verhältnis im Bereich von etwa 1,15:1 bis 5:1 liegt, d.h., dass ein gewisser Überschuss an Epoxidharz gegenüber der Summe der Gewichte von Polyester-Polyurethan und Polyacrylat vorliegt. Weiterhin ist es besonders günstig, wenn das Gewichtsverhältnis des Polyester-Polyurethans zum Polyacrylat im Bereich von etwa 2:1 bis 1:1 liegt.

Die erfindungsgemäße wasserbasierte Primerzusammensetzung kann zur Einstellung einer für die Applikation geeigneten Viskosität und zur Verbesserung der Benetzungseigenschaften zusätzlich ein wassermischbares organisches Lösungsmittel enthalten. In diesem Zusammenhang geeignete mit Wasser mischbare Lösungsmittel sind insbesondere Ether, Ketone, Ester und Alkohole die beispielsweise in Form von Tetrahydrofuran, Methylethylketon, Aceton, oder Acetaten, wie Methylacetat, Ethylacetat oder Butylacetat, eingesetzt werden können. Ein besonders geeignetes wassermischbares organisches Lösungsmittel ist Isopropanol.

Ein bevorzugter Gehalt von solchen wassermischbaren organischen Lösungsmitteln kann mit etwa 4 bis 40 Gew.-% angegeben werden.

Neben den bereits erwähnten erforderlichen Bestandteilen kann die erfindungsgemäße Zusammensetzung weitere Additive zur Einstellung gewünschter Eigenschaften enthalten. Als geeignete weitere Bestandteile sind in diesem Zusammenhang beispielsweise hydroxyfunktionelle Lösungsmittel, Entschäumer, Verdicker und Netzmittel zu nennen, es kommen jedoch auch UV- und Hitzestabilisatoren, Pigmente und Farbstoffe als Additive in Betracht.

Die Menge an Wasser in der erfindungsgemäßen Zusammensetzung stellt in der Regel den zu 100 Gew.-% in Bezug auf die erste Komponente **K1** fehlenden Anteil der Zusammensetzung.

Als zweite Komponente umfasst die wasserbasierte Primerzusammensetzung einen wasserdispergierbaren Vernetzer auf Isocyanatbasis. Dabei bestehen in Bezug auf die als Isocyanatbasis einzusetzende Polyisocyanate keine wesentlichen Beschränkungen. Besonders geeignete Polyisocyanate sind monomere Di- oder Triisocyanate oder ein Oligomeres eines monomeren Diisocyanats, insbesondere ein Biuret oder ein Isocyanurat eines monomeren Diisocyanats oder Triisocyanates.

Als Polyisocyanat geeignet sind insbesondere 1,6-Hexamethylen-diisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (= Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Tris(p-Isocyanatophenyl)thiophosphat, sowie Oligomere der vorgenannten Isocyanate. Bevorzugt sind MDI, TDI, IPDI und Tris(p-Isocyanatophenyl)thiophosphat. Besonders bevorzugt sind TDI, HDI und Tris(p-Isocyanatophenyl)thiophosphat.

Gemäß einer bevorzugten Ausführungsform der vorliegenden Erfindung enthält der wasserdispergierbare Vernetzer auf Isocyanatbasis aliphatische Polyisocyanate, wobei als aliphatische Polyisocyanate insbesondere Hexamethylendiisocyanat oder Isophorondiisocyanat eingesetzt werden können. Als am meisten geeignet ist im Rahmen der vorliegenden Erfindung ein aliphatisches Polyisocyanat in Form von Hexamethylendiisocyanat.

Als Vernetzer auf Isocyanatbasis geeignet sind darüber hinaus Isocyanatgruppen aufweisende Additionsprodukte von mindestens einem Polyol und mindestens einem monomeren Diisocyanat oder Triisocyanat, insbesondere den monomeren Diisocyanaten oder Triisocyanaten, welche im vorstehenden Abschnitt detailliert aufgeführt wurden. Derartige Additionsprodukte sind insbesondere solche mit Polyolen mit einem Molekulargewicht von weniger als 1000 g/mol, vorzugsweise weniger als 600 g/mol.

Als Polyol für derartige Additionsprodukte sind insbesondere geeignet:
- Polyetherpolyole, auch Polyoxyalkylenpolyole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen, wie beispielsweise Wasser, Ammoniak oder Verbindungen mit mehreren OH- oder NH-Gruppen, wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydroertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxylakylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren, wie NaOH, KOH, CsOH oder Alkalialkoholaten. Als Polyetherpolyole besonders geeignet sind Polyoxyalkylendiole und -triole, insbesondere Polyoxyalkylendiole. Besonders geeignete Polyoxyalkylendi- und - triole sind Polyoxyethylendi- und -triole sowie Polyoxypropylendi- und -triole. Ebenfalls besonders geeignet sind sogenannte Ethylenoxid-terminierte ("EOendcapped", ethylene oxide-endcappe), Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Polesterpolyole, welche mindestens zwei Hydroxylgruppen tragen, welche nach bekannten Verfahren, insbesondere der Polykondensation von Hydroxycarbonsäuren oder Lactonen, oder der Polykondensation von aliphatischen und/oder aromatischen Polycarbonsäuren mit zwei- oder mehrwertigen Alkoholen, hergestellt werden.
   Insbesondere geeignet sind Polyesterpolyole, welche hergestellt sind aus zweibis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophtalsäure, Trimellithsäure und Trimellithsäureanhydrid, oder Mischungen der vorgenannten Säuren; sowie Polyesterpolyole aus ε-Caprolactam und Startern, wie den vorgenannten zwei- oder dreiwertigen Alkoholen.
   Besonders geeignete Polyesterpolyole sind Polyesterdiole. Insbesondere geeignete Polyesterdiole sind solche, hergestellt aus Adipinsäure, Azelainsäure, Sebacinsäure, Dodecandicarbonsäure, Dimerfettsäure, Phthalsäure, Isophthalsäure und Terephthalsäure als Dicarbonsäure und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol. Insbesondere geeignet sind auch Polyesterdiole, hergestellt aus ε-Caprolacton und einem der vorgenannten zweiwertigen Alkohole als Starter.
- Polycarbonatpolyole, wie sie durch Polykondensation beispielsweise der oben genannten - zum Aufbau der Polyesterpolyole eingesetzten - zwei- oder dreiwertigen Alkohole mit Dialkylcarbonaten, wie Dimethylcarbonat, Diarylcarbonaten, wie Diphenylcarbonat, oder Phosgen, zugänglich sind. Besonders geeignet sind Polycarbonatdiole, insbesondere amorphe Polycarbonatdiole.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen.
- Niedrigmolekulare zwei- oder mehrwertige Alkohole, wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole, wie Xylit, Sorbit oder Mannit, Zucker, wie Saccharose, niedrigmolekulare Alkoxylierungsprodukte der vorgenannten zwei- und mehrwertigen Alkohole.

Besonders bevorzugt werden als Polyole Propylencarbonate und Polyethylenglykole und als Polyisocyanat Hexamethylendiisocyanat, das isocyanuratisiert und/oder allophanatmodifiziert sein kann, eingesetzt.

Zusätzlich zu dem wasserdispergierbaren Vernetzer auf Isocyanatbasis können auch aziridinbasierte Vernetzer als Bestandteil der zweiten Komponente eingesetzt werden. Als bevorzugte Verbindungen sind in diesem Zusammenhang beispielsweise Trimethylolpropan-tris-((2-methyl)aziridin-1-yl)-propionat, Trimethylolpropan-tris-3-(aziridin-1-yl)propionat und Pentaerithroltris-3-(aziridin-1-yl)propionat zu nennen. Derartige Verbindungen sind beispielsweise unter den Handelsnamen Xama^{®} 2, Xama^{®} 7 und Xama^{®} 200 von der Firma Biomaterial Science LLC, USA, oder unter dem Handelsnamen Chemitite^{®} PZ von der Firma Nippon Shokubai Co. Ltd., Japan, erhältlich. Da sich diese Vernetzer jedoch im Rahmen der durchgeführten Untersuchungen als weniger effektiv herausgestellt haben, sollte der Anteil der Vernetzer auf Isocyanatbasis mindestens 50 Gew.-%, insbesondere mindestens 75 Gew.-% und besonders bevorzugt mindestens 90 Gew.-%, bezogen auf das Gesamtgewicht der zweiten Komponente **K2**, ausmachen.

Der wasserdispergierbare Vernetzer auf Isocyanatbasis ist zweckmäßig in einer Menge in die wasserbasierte Primerzusammensetzung einzubeziehen, dass der Anteil der Isocyanatgruppen aus dem Vernetzer die Gesamtmenge der funktionellen Gruppen aus dem Epoxidharz, dem Polyester-Polyurethan sowie dem Polyacrylat übersteigt. Geeignete Mengen an wasserdispergierbarem Vernetzer liegen in der Regel bei 5 bis 10 Gew.-% und insbesondere 8 bis 10 Gew.-%, bezogen auf das Gesamtgewicht der ersten Komponente **K1.**

In einer ganz besonders bevorzugten Ausführungsform besteht die erfindungsgemäße wasserbasierte Primerzusammensetzung aus einer ersten Komponente bestehend aus
- etwa 17 bis 35 Gew.-% Epoxidharz mit einem Epoxyäquivalentgewicht im Bereich von 1500 bis 2500 g/eq,
- etwa 3 bis 10 Gew.-% eines elastischen Polyester-Polyurethans,
- etwa 1,75 bis 8 Gew.-% eines hydroxyfunktionellen Polyacrylats mit einer Hydroxyzahl von 130 oder mehr,
- Isopropanol und Wasser als Lösungsmittel in dem zu 100 Gew.-% fehlenden Anteil der ersten Komponente **K1**,
sowie einer zweiten Komponente **K2** bestehend aus 5 bis 10 Gew.-% eines Isocyanatvernetzers auf Basis von isocyanuratisiertem Hexamethylendiisocyanat, das mit Propylencarbonat und Polyethylenglykol formuliert ist.

Gemäß einem weiteren Aspekt betrifft die vorliegende Erfindung ein Verfahren zum Behandeln eines Substrats **S1**, umfassend die Schritte
(i) Vermischen der Komponenten einer wasserbasierten Primerzusammensetzung, wie sie vorstehend beschrieben wurde,
(ii) Auftragen der gemischten Primerzusammensetzung auf ein Substrat **S1** und
(iii) Ablüftenlassen der aufgetragenen Zusammensetzung.

Das Auftragen der vorstehend beschriebenen Primer kann auf unterschiedliche Weise erfolgen. So ist es möglich, die erfindungsgemäße wasserbasierten Primerzusammensetzung mit Hilfe eines Sprüh-, Streich-, Rakel-, Stempel-, Walz- oder Gießauftragsverfahren auf das Substrat aufzubringen. Der Auftrag wird üblicherweise mittels einer Auftragseinheit durchgeführt.

Bei dem Substrat **S1** handelt es sich vorzugweise um ein Kunststoffsubstrat. Als Kunststoffsubstrate werden insbesondere biegsame, flächige Kunststoffe in einer Dicke von 0,05 mm bis 5 mm verstanden. Der Kunststoff ist vorzugsweise ein Polycarbonat oder Polycarbonatblend, z.B. in Form von Polycarbonat /ABS.

Nach dem Vermischen und Auftragen der Zusammensetzung wird diese abgelüftet, wodurch eine abgelüftete wasserbasierte Primerzusammensetzung gebildet wird, die einen Film bildet. Dieser Film wird als Primer bezeichnet. Das Ablüften kann durch Abdunsten an Luft mit und ohne Ablüftmittel erfolgen. Als Ablüftmittel kann beispielsweise ein Gebläse, insbesondere ein Luftgebläse, dienen.

Bevorzugt wird ein Ablüftmittel eingesetzt. Das Ablüften kann bei Raumtemperatur oder bei erhöhter Temperatur erfolgen, insbesondere bei einer Temperatur von 60°C. Bevorzugt ist es, wenn das Ablüften bei niedrigen Temperaturen, z.B. durch einen Carnot-Prozess, erfolgt.

Die hergestellten primerbeschichteten Substrate zeichnen sich dadurch aus, dass ein nachträglich auf dem Primer aufgebrachter Klebstoff einen fest haftenden Verbund mit dem Primer und dem Substrat eingehen kann, so dass eine sehr haltbare Verklebung mit weiteren Substraten ermöglicht wird. Ein weiterer Aspekt der vorliegenden Erfindung betrifft daher ein Verfahren zum Verkleben von zwei Substraten **S1** und **S2**, das die Schritte
(i) Vermischen der Komponenten einer wasserbasierten Polyurethanzusammensetzung, wie vorstehend beschrieben,
(ii) Auftragen der gemischten Zusammensetzung auf ein erstes Substrat **S1**,
(iii) Ablüftenlassen der aufgetragenen Zusammensetzung,
(iv) Auftragen eines Klebstoffs auf die abgelüftete Zusammensetzung, und
(v) Inkontaktbringen des mit Klebstoff beschichteten Substrats **S1** mit einem zweiten Substrat **S2** umfasst.

Bei dem ersten Substrat **S1** sind Substrate bevorzugt, wie sie vorstehend für das Verfahren zum Behandeln eines Substrats **S1** angegeben wurden. Bei dem zweiten Substrat **S2** kann es sich ebenfalls um ein Kunststoffsubstrat, insbesondere in Form von Polycarbonat oder Polycarbonatblendsubstrat, handeln, es kann sich jedoch auch um ein Substrat aus einem anderen Material, beispielsweise aus Metall oder ein Substrat auf Basis von Glas oder einer Glaskeramik, handeln.

Das Auftragen des Klebstoffs im Schritt (iv) kann beispielsweise durch ein Sprüh-, Streich-, Rakel-, Stempel-, Walz- oder Gießauftragungsverfahren erfolgen. Bevorzugt ist allerdings der Auftrag als Klebstoffraupe aus Kartuschenpistolen oder maschinellen Auftragsanlagen.

Das Inkontaktbringen erfolgt zweckmäßig während der Offenzeit des Klebstoffs. In einer bevorzugten Ausführungsform erfolgt der Schritt des Inkontaktbringens (v) unter einem auf das Substrat **S1** ausgeübten Anpressdruck, sodass eine ausreichende Benetzung beider Substrate und eine konstruktiv gewünschte, d.h. maßhaltige, Form erreicht wird.

Bei dem in das beschriebene Verfahren einzubeziehenden Klebstoff handelt es sich vorzugsweise um einen Polyurethanklebstoff und besonders zweckmäßig um einen weichmacherhaltigen Polyurethanklebstoff, da bei Anwendung eines solchen Klebstoffs die durch die erfindungsgemäßen Primer vermittelten Vorteile am ausgeprägtesten zum Tragen kommen. Als geeigneter kommerziell erhältlicher Klebstoff kann beispielsweise Sikaflex^{®} 254 verwendet werden.

Ein weiterer Aspekt der vorliegenden Erfindung betrifft schließlich die Verwendung einer wasserbasierten Primerzusammensetzung, wie sie im Vorstehenden beschrieben wurde, als Primer für die Verklebung von Kunststoffsubstraten, wobei die gemischte Primerzusammensetzung auf ein Kunststoffsubstrat aufgetragen wird. Bei dem Kunststoffsubstrat handelt es sich vorzugsweise um ein Substrat auf Basis von Polycarbonat oder einem Polycarbonatblend, während es sich bei dem für die Verklebung zu verwendenden Klebstoff zweckmäßig um einen Polyurethanklebstoff und insbesondere um einen weichmacherhaltigen Polyurethanklebstoff handelt.

### Beispiele

Die im Folgenden angeführten Beispiele dienen zur Illustration der Erfindung.

Für die folgenden Prüfungen wurden die in Tabelle 1 angegebenen Primerzusammensetzungen im jeweils gewünschten Verhältnis mit der Vernetzerkomponente gemischt und innerhalb der Topfzeit in dünner Schicht auf ein Substrat aus Polycarbonat aufgetragen. Die Trocknung der Primerschicht erfolgte entweder bei Raumtemperatur (23°C) oder bei erhöhter Temperatur. Nach vollständiger Trocknung wurde eine Klebstoffraupe auf Basis des Polyurethanklebstoffs Sikaflex® 254 aufgetragen und 7 Tage bei Raumtemperatur ausgehärtet. Die so erhaltenen Probekörper wurden jeweils sukzessive bei unterschiedlichen klimatischen Bedingungen durch Schälprüfungen bestimmt:
1. Aushärten und Lagerung der verklebten Bauteile bei Raumtemperatur bei 23°C/50% relativer Luftfeuchtigkeit für 7 Tage,
2. 7 Tage Wasserlagerung in Leitungswasser bei 23°C,
3. 24 h Lagerung bei 80°C,
4. 7 Tage "Kataplasma"-Test (Feuchtwärmelagerung bei 100% relativer Luftfeuchtigkeit und 70°C, 7 Tage und 24 h bei -30°C, DIN ISO 9142),
5. 24 h, 100°C.

Die Haftung des Klebstoffs wurde nach jedem der Prüfzyklen manuell durch Anschneiden und anschließendes Abschälen beurteilt. Die Beurteilung der Haftung und des Bruchbildes wurde von testerfahrenen Personen vorgenommen, ohne dass Schälwerte an Zugprüfmaschinen bestimmt wurden. In allen Fällen war das beobachtete Bruchbild unter Verwendung des erfindungsgemäßen Primers kohäsiv.

**Verwendete Materialien:**

| | |
|---|---|
| EPI-REZ Resin 3540 WY-55 | Epoxidharzdispersion, 55% Feststoffgehalt basierend auf EPON Resin 1007F in Wasser und 2-Propoxyethanol |
| Waterpoxy 1422 | Epoxidharzdispersion, 54% Feststoffgehalt |
| Emuldur 381 A | Polyester-Polyurethandispersion, 40% Feststoffgehalt |
| MACRYNAL VSM 6299w/42WA | Hydroxyfunktionelle Acrylatdispersion, ca. 42%, Feststoffgehalt, Hydroxylzahl 135 |
| Joncryl 8311 | Hydroxyfunktionelle Acrylatdispersion, ca. 42% Feststoffgehalt, Hydroxylzahl 120 |
| Luhydran S945T | Hydroxyfunktionelle Dispersion, ca. 45% Feststoffgehalt, Hydroxyzahl 100 |
| Vernetzer 1 | Wasserdispergierbarer Isocyanatvernetzer auf Basis von isocyanuratisiertem Hexamethylendiisocyanat, formuliert mit Propylencarbonat und Polyethylenglykol |
| Vernetzer 2 | Wasserdispergierbarer Isocyanatvernetzer auf Basis von isocyanuratisiertem Hexamethylendiisocyanat (z.T. allophanatmodifiziert), formuliert mit Propylencarbonat und Polyethylenglykol |
| XAMA 200 | Trifunktionelles Aziridin |

**Tabelle 1**

| | | FG [%] | 1 | 2 | 3 | 4 | 5 | 6 | 7 | 8 | 9 |
|---|---|---|---|---|---|---|---|---|---|---|---|
| **Komponente 1** | | | | | | | | | | | |
| | Epirez 3540 | 54,5 | 36,4 | 43,6 | 50 | 32,7 | | 47,1 | 61,1 | 38,5 | 43,5 |
| | Waterpoxy 1422 | 55 | | | | | 36,4 | | | | |
| | Emuldur 381 A | 40 | 18,2 | 9,1 | 9,1 | 16,4 | 18,2 | 23,5 | 11,1 | 17,3 | 10,9 |
| | Macrylnal VSM6299W | 42 | 9,1 | 10,9 | 4,5 | 14,5 | 9,1 | 11,8 | 5,6 | 15,4 | 17,4 |
| | Joncryl OH 8311 | 42 | | | | | | | | | |
| | Luhydran S945T | 40 | | | | | | | | | |
| | Isopropanol | | 25,5 | 25,5 | 25,5 | 25,5 | 25,5 | 4,1 | 7,8 | 10,8 | 7,6 |
| | Wasser | | 10,9 | 10,9 | 10,9 | 10,9 | 10,9 | 13,6 | 14,4 | 18,1 | 20,7 |

| **Komponente 2** | | | | | | | | | | | |
|---|---|---|---|---|---|---|---|---|---|---|---|
| | Vernetzer 2 | | 8,0 | 8,0 | 8,0 | 8,0 | 8,0 | | | | |
| | Vernetzer 1 | | | | | | | 10,0 | 10,0 | 10,0 | 10,0 |
| | Xama 200 | | | | | | | | | | |

| **Lagerung** | | | | | | | | | | | |
|---|---|---|---|---|---|---|---|---|---|---|---|
| | RT | | i.O. | i.O. | i.O. | i.O. | i.O. | i.O. | i.O. | i.O. | i.O. |
| | Wasser | | 98% | i.O. | i.O. | i.O. | i.O. | i.O. | i.O. | i.O. | i.O. |
| | 24h 80°C | | i.O. | i.O. | i.O. | i.O. | i.O. | i.O. | i.O. | i.O. | i.O. |
| | Kat. | | i.O. | i.O. | i.O. | i.O. | n. i.O. | i.O. | i.O. | i.O. | i.O. |
| | 100°C | | i.O. | i.O. | i.O. | i.O. | i.O. | i.O. | i.O. | i.O. | i.O. |

| | | | | | | | | | | | |
|---|---|---|---|---|---|---|---|---|---|---|---|
| FG = Feststoffgehalt, 98% = leichte Ablösungen nach Wasserlagerung (98% i.O.); i.O. = in Ordnung; n.i.O. = nicht in Ordnung | | | | | | | | | | | |

**Tabelle 2**

| | | FG [%] | V1 | V2 | V3 | V4 | V5 | V6 |
|---|---|---|---|---|---|---|---|---|
| **Komponente 1** | | | | | | | | |
| | Epirez 3540 | 54,5 | 31,3 | 40 | 16,7 | 16,7 | 49,5 | 66,0 |
| | Waterpoxy 1422 | 55 | | | | | | |
| | Emuldur 381 A | 40 | 62,5 | 60 | 16,7 | 66,7 | 16,5 | 16,5 |
| | Macrylnal VSM6299W | 42 | | | 66,7 | 16,7 | | |
| | Joncryl OH 8311 | 42 | | | | | 33,0 | |
| | Luhydran S945T | 40 | | | | | | 16,5 |
| | Isopropanol | | 6,3 | | | | | |
| | Diisononylphthalat | | | | | | 1,0 | 1,0 |

| **Komponente 2** | | | | | | | | |
|---|---|---|---|---|---|---|---|---|
| | Vernetzer 2 | | 6,0 | 6,0 | 6,0 | 6,0 | | |
| | Vernetzer 1 | | | | | | | |
| | Xama 200 | | | | | | 2,0 | 2,0 |

| **Lagerung** | | | | | | | | |
|---|---|---|---|---|---|---|---|---|
| | RT | | n.i.O. | n.i.O. | i.O. | n.i.O. | n.i.O. | i.O. |
| | Wasser | | n.i.O. | n.i.O. | i.O. | n.i.O. | n.i.O. | i.O. |
| | 24h 80°C | | n.i.O. | n.i.O. | n.b. | n.i.O. | n.i.O. | i.O. |
| | Kat. | | n.i.O. | n.i.O. | n.b. | n.i.O. | n.i.O. | n.i.O. |
| | 100°C | | n.i.O. | n.i.O. | n.i.O. | n.i.O. | n.i.O. | n.b. |

| | | | | | | | | |
|---|---|---|---|---|---|---|---|---|
| i.O. = in Ordnung; n.i.O. = nicht in Ordnung; n.b. = nicht bestimmt | | | | | | | | |

## Patentansprüche

1. Wasserbasierte Primerzusammensetzung mit
einer ersten Komponente **K1** umfassend
- eine wässrigen Epoxidharzdispersion in einer Menge, dass der Gehalt des Epoxidharzes in der ersten Komponente 15 bis 45 Gew.-% beträgt,
- eine wässrige Polyester-Polyurethandispersion in einer Menge, dass der Gehalt des Polyester-Polyurethans in der ersten Komponente 2 bis 12 Gew.-% beträgt,
- eine wässrige Polyacrylatdispersion in einer Menge, dass der Gehalt des Polyacrylats in der ersten Komponente 1,5 bis 9 Gew.-% beträgt, sowie
- gegebenenfalls ein wassermischbares organisches Lösungsmittel in einer Menge von bis zu 40 Gew.-%, bezogen auf die erste Komponente,
und einer zweiten Komponente **K2** umfassend einen wasserdispergierbaren Vernetzer auf Isocyanatbasis.

2. Wasserbasierte Primerzusammensetzung gemäß Anspruch 1, **dadurch gekennzeichnet, dass** das Epoxidharz in der ersten Komponente **K1** ein Epoxyequivalentgewicht von mindestens 1400 g/eq, bevorzugt im Bereich von 1500 bis 2500 g/eq aufweist.

3. Wasserbasierte Primerzusammensetzung gemäß Anspruch 1 oder 2, **dadurch gekennzeichnet, dass** der Gehalt des Epoxidharzes in der ersten Komponente **K1** 17 bis 35 Gew.-% beträgt.

4. Wasserbasierte Primerzusammensetzung gemäß einem der Ansprüche 1 bis 3, **dadurch gekennzeichnet, dass** das Polyacrylat in der ersten Komponente **K1** ein hydroxyfunktionelles Polyacrylat ist.

5. Wasserbasierte Primerzusammensetzung gemäß Anspruch 4, **dadurch gekennzeichnet, dass** das hydroxyfunktionelle Polyacrylat eine Hydroxylzahl von 125 oder mehr, bevorzugt von 130 oder mehr aufweist.

6. Wasserbasierte Primerzusammensetzung gemäß einem der vorstehenden Ansprüche, **dadurch gekennzeichnet, dass** das Gewichtsverhältnis des Epoxidharzes zur Summe aus Gewichtsanteil des Polyester-Polyurethans und des Polyacrylats im Bereich von etwa 1,15 : 1 bis 5 : 1 liegt.

7. Wasserbasierte Primerzusammensetzung gemäß einem der vorstehenden Ansprüche, **dadurch gekennzeichnet, dass** das Gewichtsverhältnis des Polyester-Polyurethans zum Polyacrylats im Bereich von etwa 2:1 bis 1:1 liegt.

8. Wasserbasierte Primerzusammensetzung gemäß einem der vorstehenden Ansprüche, **dadurch gekennzeichnet, dass** die erste Komponente **K1** Isopropanol als wassermischbares organisches Lösungsmittel enthält.

9. Wasserbasierte Primerzusammensetzung gemäß einem der vorstehenden Ansprüche, **dadurch gekennzeichnet, dass** der wasserdispergierbare Vernetzer auf Isocyanatbasis in Form eines Prepolymers von Polyolen und aliphatischen Polyisocyanaten vorliegt.

10. Wasserbasierte Primerzusammensetzung gemäß Anspruch 9, **dadurch gekennzeichnet, dass** als aliphatische Polyisocyanate Hexamethylendiisocyanat oder Isophorondiisocyanat in das Prepolymer einbezogen werden.

11. Wasserbasierte Primerzusammensetzung gemäß einem der vorstehenden Ansprüche, **dadurch gekennzeichnet, dass** die zweite Komponente **K2** in einer Menge von 5 bis 10 Gew.-%, bezogen auf das Gesamtgewicht der ersten Komponente einbezogen wird.

12. Verfahren zum Behandeln eines Substrats **S1**, insbesondere eines Kunststoffsubstrats, bevorzugt auf Basis von Polycarbonat, umfassend die Schritte
i) Vermischen der Komponenten einer wasserbasierten Primerzusammensetzung gemäß einem der Ansprüche 1 bis 11,
ii) Auftragen der gemischten Zusammensetzung auf ein Substrat **S1**, und
iii) Ablüftenlassen der aufgetragenen Zusammensetzung.

13. Verfahren zum Verkleben von zwei Subtraten **S1** und **S2**, wobei das Substrat **S1** ein Kunststoffsubstrat, bevorzugt auf Basis von Polycarbonat, ist, umfassend die Schritte
i) Vermischen der Komponenten einer wasserbasierten Primerzusammensetzung gemäß einem der Ansprüche 1 bis 11,
ii) Auftragen der gemischten Zusammensetzung auf ein erstes Substrat **S1**,
iii) Ablüftenlassen der aufgetragenen Zusammensetzung,
iv) Auftragen eines Klebstoffs auf die abgelüftete Zusammensetzung, und
v) In-Kontakt-bringen des mit Klebstoff-beschichteten Substrats **S1** mit einem zweiten Substrat **S2**.

14. Verfahren nach Anspruch 13, **dadurch gekennzeichnet, dass** es sich bei dem Klebstoff um einen Polyurethanklebstoff, bevorzugt einen weichmacherhaltigen Polyurethanklebstoff handelt.

15. Verwendung einer wasserbasierten Primerzusammensetzung gemäß einem der Ansprüche 1 bis 11 als Primer für die Verklebung von Kunststoffsubstraten, bevorzugt auf Basis von Polycarbonat, mit weichmacherhaltigen Polyurethanklebstoffen, wobei die gemischte Primerzusammensetzung auf ein Kunststoffsubstrat aufgetragen wird.
